# EUROPEAN PATENT APPLICATION

(11) **EP 4 563 220 A1**
(43) Date of publication of application: **04.06.2025**
(21) Application number: 23850189.4
(22) Date of filing: 09.01.2023
(51) Int. Cl.: B01F 27/723, H01M 4/04, B01F 27/722, B01F 27/1143, B01F 27/726, B01F 101/59

(54) **TWIN-SCREW EXTRUDER**

(30) Priority: 02.08.2022 KR 20220096028
(71) Applicant: LG Electronics Inc., Yeongdeungpo-gu Seoul 07336 (KR)
(72) Inventor: LEE, Seunggun, Seoul 06772 (KR); NAM, Heejeong, Seoul 06772 (KR); LEE, Jaeseung, Seoul 06772 (KR); KIM, Geonwoo, Seoul 06772 (KR); LEE, Wonsuk, Seoul 06772 (KR)
(74) Representative: Schornack, Oliver
(86) International application number: PCT/KR2023/000399
(87) International publication number: WO 2024/029674

(57) **Abstract**

A twin-screw extruder comprises: a barrel having a space formed therein; a left screw and a right screw received in the space; and a drive mechanism for rotating the left screw and right screw, wherein the left screw comprises a left fiberization screw, the right screw comprises a right fiberization screw, wherein a compression space is formed between the left fiberization screw and the right fiberization screw in which the powder is compressed, wherein each of the left fiberization screw and the right fiberization screw includes: a hollow portion connected to a shaft; and a screw portion formed on an outer circumference of the hollow portion, and wherein the screw portion has a flight groove recessed therein through which the powder passes axially.

## Description

### [Technical Field]

The present invention relates to a twin-screw extruder.

### [Background Art]

A secondary battery is a device that converts electrical energy into chemical energy, stores the converted energy, and generates electricity when needed. Both charging and discharging occur at one electrode, and anode (- electrode) and cathode (+ electrode) are distinguished based on the discharge reaction.

A secondary battery includes: an anode and cathode plates with an active material applied to the collector; a separator separating the anode and cathode plates from each other; an electrolyte that transfers ions through the separator; a case accommodating the anode plate, the separator, and the cathode plate; and lead taps that are connected to the anode and cathode plates and extend outwardly.

The anode plate may include an anode material, and the process of making the anode material during the electrode fabrication process of the secondary battery may include mixing the active material, the conductive material, and the binder, and then needs to apply a force to cause fibrosis (fiberization) to form a connection between the particles.

If the powder containing the active material, the coating material, and the binder is fed into an extruder and is forced by a single screw, the fiberization of the powder may be minimal.

### [Disclosure]

### [Technical Problem]

The embodiment of the present invention provides a twin-screw extruder in which the fiberizing screw simultaneously applies flowability and shear force to the powder, thereby allowing fiberization of the powder to be fiberized.

### [Technical Solution]

A twin-screw extruder according to an embodiment of the present invention comprises: a barrel having a space formed therein; a left screw and a right screw received in the space; and a drive mechanism for rotating the left screw and right screw, wherein the left screw comprises a left fiberization screw, the right screw comprises a right fiberization screw, wherein a compression space is formed between the left fiberization screw and the right fiberization screw in which the powder is compressed, wherein each of the left fiberization screw and the right fiberization screw includes: a hollow portion connected to a shaft; and a screw portion formed on an outer circumference of the hollow portion, and wherein the screw portion has a flight groove recessed therein through which the powder passes axially.

The flight groove is provided in plurality and the plurality of flight grooves are spaced apart from each other in an extending direction of the screw portion.

The flight groove is arc-shaped or polygon-shaped.

The left screw further comprises a left feed screw coupled to the left fiberization screw, wherein the right screw further comprising a right feed screw coupled to the right fiberizing screw.

The left fiberization screw and the right fiberization screw are oriented in a left-to-right direction.

The left feed screw and right feed screw are oriented in the left and right direction.

The left fiberization screw and the left feed screw are arranged in line in a lengthwise direction of the left screw.

The right fiberization screw and the right feed screw are disposed in line in a longitudinal direction of the right screw.

The left screw comprises a pair of left feed screws spaced apart in the longitudinal direction of the left screw, the left fiberization screw is disposed between the pair of left feed screws.

The right screw comprises a pair of right feed screws spaced apart longitudinally of the right screw, the right fiberization screw is disposed between the pair of right feed screws.

The barrel comprises an inlet formed on an upper surface for receiving powder; and an outlet formed on a front or side surface for discharging powder.

The barrel comprises an inlet formed on an upper surface for receiving power; and an outlet formed on a lower surface for discharging powder.

The left screw comprises a left reverse screw configured to convey powder in a direction opposite to the powder conveying direction of the left feed screw,
and wherein the right screw comprises a right reverse screw configured to convey powder in a direction opposite to the powder conveying direction of the right feed screw.

A pitch of a screw portion of the left reverse screw is smaller than a pitch of a screw portion of the left feed screw.

A pitch of a screw portion of the right reverse screw is smaller than a pitch of a screw portion of the right feed screw.

### [Advantageous Effects]

According to the embodiments of the present invention, the powder located in the compression space formed between the left and right screws can be fibroticized by shear force acting in opposite directions, and the fibroticized powder can be continuously transported through the flight groove.

### [Description of Drawings]

FIG. 1 is a perspective view illustrating a twin-screw extruder according to an embodiment of the present invention.
FIG. 2 is a perspective view showing the interior of the barrel shown in FIG. 2.
FIG. 3 is a perspective view showing an enlarged view of an example of the left screw and right screw shown in FIG. 2.
FIG. 4 is a side view of the left fibered screw and the right fibered screw illustrated in FIG. 3.
FIG. 5 is a front view of the left fibular screw and the right fibular screw shown in FIG. 2.
FIGS. 6 to 8 are enlarged plan views of another example of a left screw and a right screw according to the present invention.

### [Mode for Invention]

Hereinafter, specific embodiments of the present invention will be described in detail with reference to the drawings.

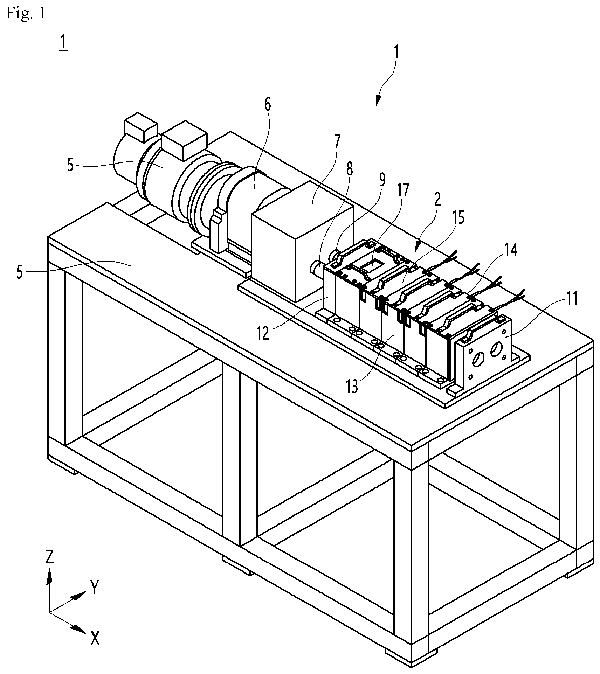

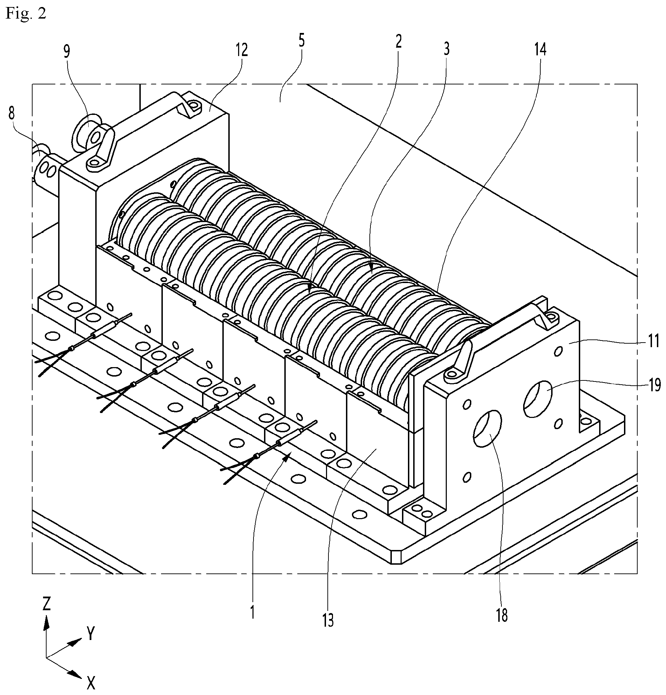

Fig. 1 is a perspective view of a twin-screw extruder according to an embodiment of the present invention, and Fig. 2 is a perspective view of the interior of the barrel shown in Fig. 2.

The anode material production process for producing anode material for a secondary battery may include: a mixing process for mixing an active material with a coating material and a binder; a fiberization process for fiberizing the mixed powder; and a process for manufacturing the fiberized powder into a sheet shape.

The fiberization process may be performed by a twin screw extruder (1, Twin Screw Extruder) as shown in Figs. 1 and 2.

The twin screw extruder 1 may be a screw device having two screws, and may induce the occurrence of fiberization by shear force between the screws.

The twin-screw extruder 1 preferably generates flowability so that an input of powder and a discharge of powder occur continuously, and preferably has a shape and combination of screws according to the characteristics of the powder.

The binder constituting the powder may be a binder of the Teflon series, and the powder may be fiberized and discharged in a multidirectional manner by the twin-screw extruder 1.

Hereinafter, the twin-screw extruder 1 will be described in detail.

The twin-screw extruder 1 may include: a barrel 1 having a space formed therein; a left screw 2 and a right screw 3 accommodated in the space; and a drive mechanism 4 for rotating the left screw 2 and the right screw 3.

The barrel 1 and the drive mechanism 4 may be disposed on a table 5.

The barrel 1 may be elongated in a front-to-back direction (X) on the table 5.

The barrel 1 may include a front barrel 11 and a rear barrel 12 spaced apart in the front-to-back direction, and a left barrel 13 and a right barrel 14 spaced apart in the left-to-right direction.

The front barrel 11, the rear barrel 12, the left barrel 13, and the right barrel 14 may form a space in which the left screw 2 and the right screw 3 are received together.

Each of the front barrel 11 and the rear barrel 12 may rotatably support the left screw 2 and the right screw 3.

Each of the front barrel 11 and the rear barrel 12 may include a left supporter 18 for rotatably supporting a left shaft 8 connected to the left screw 2 and a right supporter 19 for rotatably supporting a right shaft 9 connected to the right screw 3.

The left barrel 13 and the right barrel 14 may be formed in one piece with the front barrel 11 and the rear barrel 12.

The barrel 1 may include an upper barrel 15 covering the space from an upper side of the space, and a lower barrel (not shown) spaced apart from the upper barrel 15 in an upward and downward direction.

The barrel 1 may have an inlet 17 formed on a top surface through which powder is injected, and an outlet (not shown) formed on a front or side surface through which powder is discharged.

The inlet 17 may be formed in the upper barrel 15. The inlet 17 may be closer to the rear barrel 12 than to the front barrel 11.
the outlet may be formed in at least one of the front barrel 11, the left barrel 13, or the right barrel 14. When the outlet is formed in the left barrel 13 and the right barrel 14, the outlet may be closer to the front barrel 11 than to the rear barrel 12.

The left screw 2 and the right screw 3 may be disposed left and right in the interior of the barrel 1. The left screw 2 and right screw 3 may be disposed left and right in a left-right direction (Y), and each of them may be elongated in a front-to-back direction (X).

The drive mechanism 4 may be arranged in line with the barrel 1 in the front-to-back direction (X).

The drive mechanism 4 may comprise a motor 5, a reducer 6 connected to a rotational shaft of the motor 5, and a gearbox 7 disposed between the reducer 6 and the barrel 1.

The gear box 7 may be connected to an output shaft of the reducer 6. Left and right shafts may be connected to the gear box 7. The left shaft 8 may be connected to the left screw 2 to rotate the left screw 2. The right shaft 9 may be connected to the right screw 3 to rotate the right screw 3.

The gear box 7 may include a plurality of power transmission gears, and a box housing that encloses the plurality of power transmission gears.

The plurality of transmission gears may include a main gear connected to the output shaft of the reducer, a left gear connected to the left shaft 8, and a right gear connected to the right shaft 9.

One example of the drive mechanism 4 is capable of rotating the left screw 2 and the right screw 3 in the same direction. The left screw 2 and the right screw 3 may be rotated clockwise together or counterclockwise together.

In another example of the drive mechanism 4, it is possible to rotate the left screw 2 and the right screw 3 in opposite directions to each other. In this case, the gearbox 7 of the drive mechanism 4 may further comprise a counter gear disposed between the main gear and the left gear or between the main gear and the right gear. When one of the left screw 2 and the right screw 3 rotates clock wise, the other of the left screw 2 and the right screw 3 may rotate counterclockwise.

The left shaft 8 may penetrate the rear barrel 12 and the right shaft 9 and may extend into the space of the barrel 1.

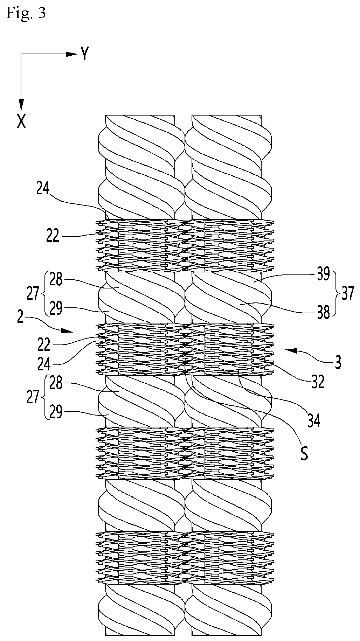

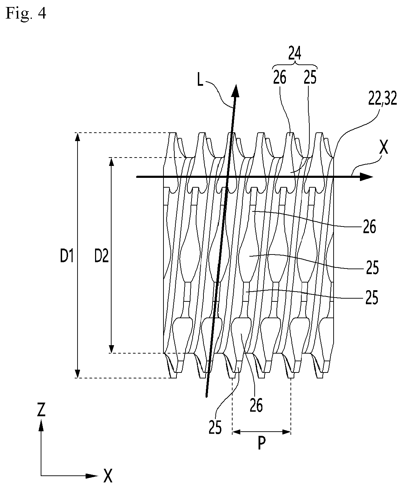

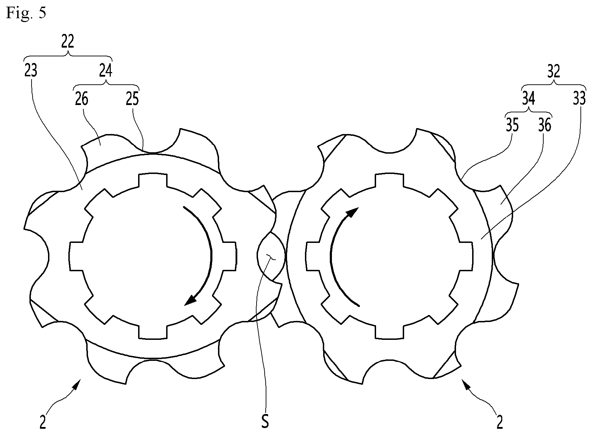

Fig. 3 is an enlarged top view of an example left screw and right screw illustrated in Fig. 2, Fig. 4 is a side view of the left fibrosis screw and right fibrosis screw illustrated in Fig. 3, and Fig. 5 is a front view of the left fibrosis screw and right fibrosis screw illustrated in Fig. 2.

The left screw 2 may include a left fiberization screw 22.

The right screw 3 may include a right fiberization screw 23.

Between the left fiberization screw 22 and the right fiberization screw 32, a compression space S may be formed in which the powder is compressed.

Each of the left fiberization screw 2 and the right fiberization screw 3 may include a hollow portion and a screw portion.

The hollow portion may be connected with a shaft.

The screw portion may be formed to protrude radially from an outer circumference of the hollow portion. The screw portion may extend helically along the hollow portion. A flight groove may be formed in the screw portion through which the powder passes in the axial direction (X). The flight groove may be open in the screw portion in the axial direction (X). The flight groove may be recessed in the screw portion. The flight groove may be an inwardly recessed groove in the screw portion. The flight groove may have an arc shape or a polygonal shape. The flight grooves may be formed in plurality along the longitudinal direction (i.e., helical direction) of the screw portion, and the plurality of flight grooves may be spaced apart from each other along the longitudinal direction (extending direction) of the screw portion.

The screw portion may include a plurality of blade portions for guiding the powder. The blade portions and the flight grooves may be alternately formed in the longitudinal direction (i.e., helical direction) of the screw portion.

The flight grooves may be formed in the outer circumference of each of the left fiberization screw 22 and the right fiberization screw 32 to a depth within 1/2 of the maximum diameter (D1, see FIG. 4) of the left fiberization screw 22 and the right fiberization screw 32.

The minimum diameter (D2, see FIG. 4) of the left fiberization screw 22 and the right fiberization screw 32 may be less than the maximum diameter (D2, see FIG. 4) of the left fiberization screw 22 and the right fiberization screw 32.

The left fiberization screw 22 and the right fiberization screw 32 may be formed such that a portion other than the portion forming the minimum diameter D2 (e.g., the blade portion) can transmit a force to push the powder or the like, and the portion other than the portion forming the minimum diameter D2 is defined as a flight to push the powder or the like.

The screw portion of the fiberization screw 22 (32) may have a pitch (P, see FIG. 4) in the range of 10 mm to 100 mm.

The pitch P of the screw portion of the fiberization screw 22 (32) may be smaller than the pitch of the screw portion 29 (39) of the feed screw 27 (37) described later. For example, the thread pitch P of the fiberization screw 22 (32) may be 1/2 or less of the thread pitch 29 (39) of the feed screw 27 (37).

The left fiberization screw 22 may include a left hollow portion 23 connected to the left shaft 8. The left hollow portion 23 may rotate integrally with the left shaft 8.

The left fiberization screw 22 may include a left screw portion 24 formed on an outer circumference of the left hollow portion 23. The left screw portion 24 may extend helically along the left hollow portion 23. The left screw portion 24 may form a left flight groove 25 through which powder passes in the axial direction (X). The left flight groove 25 may be recessed in the left screw portion 24. The left flight groove 25 may be an inwardly recessed groove in the left screw portion 24. The left flight groove 25 may be formed in plurality along the longitudinal direction (L, helical direction) of the left screw part 24, and the plurality of left flight grooves 25 may be spaced apart from each other.

The left screw portion 24 may include a plurality of left blade portions 26 for guiding the powder. The left blade portions 26 and left flight grooves 25 may be alternately formed in the longitudinal direction (L, helical direction) of the left screw portion 24.

The right fiberization screw 32 may include a right hollow portion 33 connected to the right shaft 9. The right hollow portion 33 may rotate integrally with the right shaft 9.

The right fiberization screw 32 may include a right screw portion 34 formed on an outer circumference of the right hollow portion 33. The right screw portion 34 may extend helically along the right hollow portion 33. The right screw portion 34 may form a right flight groove 35 through which powder passes in the axial direction (X). The right flight groove 35 may be recessed in the right screw portion 34. The right flight groove 35 may be an inwardly recessed groove in the right screw portion 34. The right flight groove 35 may be formed in plurality along the longitudinal direction (L, helical direction) of the right screw portion 34, and the plurality of right flight grooves 35 may be spaced apart from each other.

The right screw portion 34 may include a plurality of right blade portions 36 for guiding the powder. The right blade portions 36 and the right flight grooves 35 may be alternately formed in the longitudinal direction (L, helical direction) of the right screw portion.

The left screw 2 may further comprise a left feed screw 27 coupled to the left fiberization screw 22. The left feed screw 27 may include a hollow portion 28 to which the left shaft 8 is coupled, and a screw portion 29 elongated in a helical direction on the outer circumference of the hollow portion 28.

The screw portion 29 of the left feed screw 27 is a portion capable of transmitting a force for pushing powder or the like, and may be defined as a flight of the left feed screw 27.

The right screw 3 may further comprise a right feed screw 37 coupled to the right fiberization screw 32. The right feed screw 37 may include a hollow portion 38 to which the right shaft 9 is coupled, and a screw portion 39 elongated in a helical direction on the outer circumference of the hollow portion 38.

The screw portion 39 of the right feed screw 37 is a portion capable of transmitting a force to push powder or the like, and may be defined as a flight of the right feed screw 27.

As shown in Fig. 3, the left fiberization screw 22 and the left feed screw 26 may be arranged in line in the longitudinal direction (X) of the left screw 2.

The right fiberization screw 32 and the right feed screw 37 may be arranged in line in the longitudinal direction (X) of the right screw 3.

The left fiberization screw 22 and the right fiberization screw 32 may be oriented in a left-to-right direction (Y), as shown in Fig. 3, and the left feed screw 27 and the right feed screw 37 may be oriented in a right-to-left direction (Y), as shown in Fig. 3.

The left screw 2 may include a pair of left feed screws 27 spaced apart in the longitudinal direction (X) of the left screw 2, and the left fiberization screw 22 may be disposed between the pair of left feed screws 27. The left screw 2 may include a pair of left fiberization screws 22 spaced apart in a longitudinal direction (X) of the left screw 2, and the left feed screw 27 may be disposed between the pair of left fiberization screws 22.

The right screw 3 may include a pair of right feed screws 37 spaced apart in the longitudinal direction (X) of the right screw 3, and the right fiberization screw 32 may be disposed between the pair of right feed screws 37. The right screw 3 may include a pair of right fiberization screws 32 spaced apart in the longitudinal direction (X) of the right screw 3, and the right feed screw 37 may be disposed between the pair of right fiberization screws 32.

The left screw 2 and right screw 3 configured as described above may be rotated in the same direction, as shown in Fig. 4.

In this case, upon rotation of the left fiberization screw 22, a downwardly directed shear force may be exerted on the powder located in the compression space S. Upon rotation of the right fiberization screw 32, an upwardly directed shear force may act on the powder located in the compression space S.

The powders located in the compression space S may be subjected to strong shear forces directed in opposite directions, and fiberization may be induced.

Meanwhile, the fiberization -induced powder may pass through the left flight groove 25 and the right flight groove 35, and may be moved in the axial direction X of the left screw 2 and the axial direction X of the right screw 3, and the powder may be continuously moved in the axial direction X by the left screw 2 and the right screw 3 as the fiberization is induced.

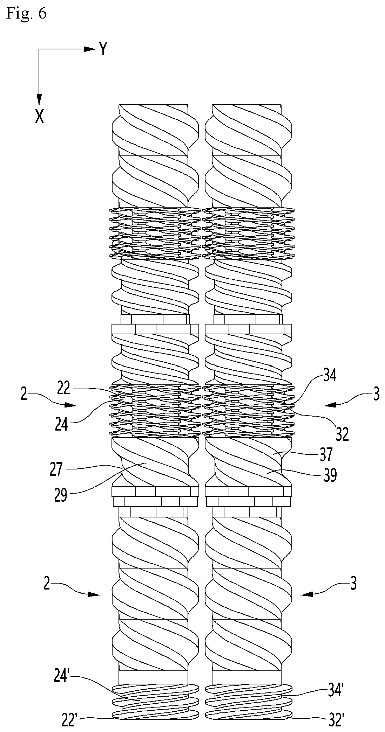

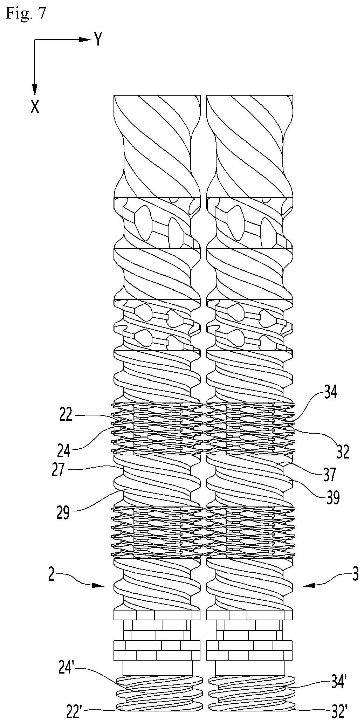

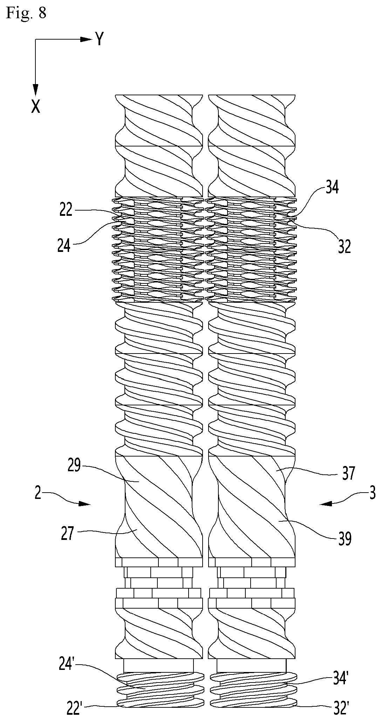

Figs. 6 to 8 are enlarged plan views of another example of a left screw and a right screw according to the present embodiment.

The barrel 1(see FIG. 1) may have an inlet 17 on an upper surface for powder input and an outlet (not shown) on a lower surface for powder discharge.

The left screw 2 may include a left f fiberization screw 22 and a left feeding screw 27, and may further include a left reverse screw 22' that feeds powder in a direction opposite to the powder feeding direction of the left feeding screw 27.

The left fiberization screw 22 and the left feed screw 27 may be the same or similar to the left fiberization screw 22 and the left feed screw 27 shown in FIG. 3, and the same drawing symbols are used and detailed description thereof is omitted to avoid redundant description.

The left reverse screw 22' may be disposed at the leading end of the left screw 2, and may be proximate to the front barrel 11(see FIG. 1).

The left reverse screw 22' may include a hollow portion and a screw portion 24'.

The helical direction of the screw portion 24' of the left reverse screw 22' may be opposite to the helical direction of the screw portion 24 of the left fiberization 22.

The helical direction of the screw portion 24' of the left reverse screw 22' may be opposite to the helical direction of the screw portion 29 of the left feed screw 27.

The pitch of the screw portion 24' of the left reverse screw 22' may be smaller than the pitch of the screw portion 29 of the left feed screw 27.

The left reverse screw 22' can guide the powder directed toward the front barrel 11 by the left screw 2 to the upper side of the outlet, and the powder can be discharged smoothly through the outlet without clumping around the front barrel 11.

The right screw 3 may include a right fiberization screw 32 and a right feed screw 37, and may further include a right reverse screw 32' that conveys powder in a direction opposite to the powder conveying direction of the right feed screw 37.

The right fiberization screw 32 and the right feed screw 37 may be the same or similar to the right fiberization screw 32 and the right feed screw 37 shown in FIG. 3, and the same drawing symbols are used and detailed description thereof is omitted to avoid redundant description.

The right reverse screw 32' may be disposed at the leading end of the right screw 3, and may be proximate to the front barrel 11.

The right reverse screw 32' may include a hollow portion and a screw portion 34'.

The screw portion 34' of the right reverse screw 32' may have a helical direction opposite to the screw portion 34 of the right fiberization screw 32.

The screw portion 34' of the right reverse screw 32' may have the opposite helical direction to the screw portion 39 of the right feed screw 37.

The pitch of the screw portion 34' of the right reverse screw 32' may be smaller than the pitch of the screw portion 39 of the right feed screw 37.

The right reverse screw 32' can guide the powder directed toward the front barrel 11 by the right screw 3 to the upper side of the outlet, and the powder can be discharged smoothly through the outlet without clumping around the front barrel 11.

The above description is merely an exemplary description of the technical ideas of the present invention, and various modifications and variations will be apparent to one having ordinary knowledge in the technical field to which the present invention belongs, without departing from the essential features of the invention.

Accordingly, the embodiments disclosed herein are intended to illustrate and not to limit the technical ideas of the invention, and the scope of the technical ideas of the invention is not limited by these embodiments.

The scope of protection of the present invention shall be construed in accordance with the following claims, and all technical ideas within the scope thereof shall be construed as falling within the scope of the present invention.

## Claims

1. A twin-screw extruder, comprising:
a barrel having a space formed therein;
a left screw and a right screw received in the space; and
a drive mechanism for rotating the left screw and right screw,
wherein the left screw comprises a left fiberization screw,
the right screw comprises a right fiberization screw,
wherein a compression space is formed between the left fiberization screw and the right fiberization screw in which the powder is compressed,
wherein each of the left fiberization screw and the right fiberization screw includes:
a hollow portion connected to a shaft; and
a screw portion formed on an outer circumference of the hollow portion,
and wherein the screw portion has a flight groove recessed therein through which the powder passes axially.

2. The extruder of claim 1, wherein the flight groove is provided in plurality and the plurality of flight grooves are spaced apart from each other in an extending direction of the screw portion.

3. The twin-screw extruder of claim 1, wherein the flight groove is arc-shaped or polygon-shaped.

4. The twin-screw extruder of claim 1, wherein the left screw further comprises a left feed screw coupled to the left fiberization screw,
wherein the right screw further comprising a right feed screw coupled to the right fiberizing screw,
wherein the left fiberization screw and the right fiberization screw are oriented in a left-to-right direction,
and wherein the left feed screw and right feed screw are oriented in the left and right direction.

5. The twin screw extruder of claim 4, wherein the left fiberization screw and the left feed screw are arranged in line in a lengthwise direction of the left screw,
And wherein the right fiberization screw and the right feed screw are disposed in line in a longitudinal direction of the right screw.

6. The extruder of claim 5, wherein the left screw comprises a pair of left feed screws spaced apart in the longitudinal direction of the left screw,
and wherein the left fiberization screw is disposed between the pair of left feed screws.

7. The extruder of claim 5, wherein the right screw comprises a pair of right feed screws spaced apart longitudinally of the right screw,
and wherein the right fiberization screw is disposed between the pair of right feed screws.

8. The twin-screw extruder of claim 4, wherein the barrel comprises:
an inlet formed on an upper surface for receiving powder; and
an outlet formed on a front or side surface for discharging powder.

9. The twin-screw extruder of claim 4, wherein the barrel comprises:
an inlet formed on an upper surface for receiving power; and
an outlet formed on a lower surface for discharging powder.

10. The twin-screw extruder of claim 4, wherein the left screw comprises a left reverse screw configured to convey powder in a direction opposite to the powder conveying direction of the left feed screw,
and wherein the right screw comprises a right reverse screw configured to convey powder in a direction opposite to the powder conveying direction of the right feed screw.

11. The twin screw extruder of claim 10, wherein a pitch of a screw portion of the left reverse screw is smaller than a pitch of a screw portion of the left feed screw,
and wherein a pitch of a screw portion of the right reverse screw is smaller than a pitch of a screw portion of the right feed screw.
